(19) Europäisches Patentamt
European Patent Office
Office européen des brevets

(11) EP 1 829 901 B1

(12) # FASCICULE DE BREVET EUROPEEN

(45) Date de publication et mention de la délivrance du brevet:
**13.04.2016 Bulletin 2016/15**

(51) Int Cl.:
***C08F 10/02*** *(2006.01)* ***C08F 4/54*** *(2006.01)*
***C07F 17/00*** *(2006.01)*

(21) Numéro de dépôt: **07010599.4**

(22) Date de dépôt: **06.10.2000**

(54) **SYSTÉME CATALYTIQUE ET SON PROCÉDÉ DE PRÉPARATION**

KATALYSATORSYSTEM, VERFAHREN ZU SEINER HERSTELLUNG UND VERFAHREN ZUR HERSTELLUNG EINES COPOLYMERS VON ETHYLEN-KONJUGIERTEM DIEN

CATALYTIC SYSTEM, PROCESS FOR ITS PREPARATION AND THAT OF AN ETHYLENE-CONJUGATED DIENE COPOLYMER

(84) Etats contractants désignés:
**AT BE CH CY DE DK ES FI FR GB GR IE IT LI LU MC NL PT SE**

(30) Priorité: **12.10.1999 FR 9912798**

(43) Date de publication de la demande:
**05.09.2007 Bulletin 2007/36**

(62) Numéro(s) de document de la (des) demande(s) initiale(s) en application de l'article 76 CBE:
**00121834.6 / 1 092 731**

(73) Titulaires:
- **COMPAGNIE GENERALE DES ETABLISSEMENTS MICHELIN**
  **63000 Clermont-Ferrand (FR)**
- **Michelin Recherche et Technique S.A.**
  **1763 Granges-Paccot (CH)**
- **ARKEMA FRANCE**
  **92700 Colombes (FR)**

(72) Inventeurs:
- **Boisson, Christophe**
  **01390 Tramoyes (FR)**
- **Spitz, Roger**
  **69006 Lyon (FR)**
- **Barbotin, Fanny**
  **63000 Clermont-Ferrand (FR)**

(74) Mandataire: **Le Cam, Véronique Marie Christine et al**
**Michelin & Cie**
**Service SGD/LG/PI - LAD (F35)**
**63040 Clermont-Ferrand Cedex 09 (FR)**

(56) Documents cités:
**US-A- 4 801 666** **US-A- 5 109 085**

- **CUI, LI QIANG ET AL: "Preliminary investigations on polymerization catalysts composed of lanthanocene and methyl aluminoxane" POLYM. BULL. (BERLIN) (1998), 40(6), 729-734, 1998, XP000755393**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un système catalytique utilisable pour la copolymérisation de l'éthylène et d'un diène conjugué.

Il est connu de polymériser l'éthylène au moyen de certains complexes à base de lanthanides.

Ces catalyseurs peuvent être- utilisés sur une large gamme de pression et de température, avantageusement à pression réduite et à une température proche de l'ambiante pour la polymérisation de l'éthylène.

Les premiers complexes à base de lanthanides qui ont été décrits dans la littérature sont des complexes alkylés. En particulier, Ballard et al. ont décrit dans J. Chem. Soc., Chem. Comm. pp. 994-995 (1978) la polymérisation de l'éthylène au moyen d'un complexe répondant à la formule $[(C_5H_5)_2ErMe]_2$ (où Me est un groupe méthyl).

Ces complexes alkylés peuvent atteindre des activités instantanées qui sont très élevées, comme cela est décrit dans le document de brevet américain US-A-4 716 257, en référence à un complexe analogue répondant à la formule $[(C_5Me_5)_2 Ln H]_2$ (où Ln représente un lanthanide).

Cependant, un inconvénient majeur de ces complexes alkylés est qu'ils se désactivent très rapidement.

Un autre inconvénient réside dans la relative complexité de leur synthèse.

Pour pallier ces inconvénients, on a cherché à développer des complexes non alkylés à base de lanthanides. Ces complexes possèdent une liaison métal-halogène, et ils sont alkylés dans le milieu de polymérisation. Le document de brevet américain US-A-5 109 085 décrit la polymérisation de l'éthylène avec des complexes de formule $C_{Pn}LnX_{4-n}$ M'Lx (où L est une molécule complexante et où x est un entier égal ou supérieur à 1), qui sont additionnés d'un ou plusieurs co-catalyseurs. Ce document évoque par ailleurs la possibilité de copolymériser l'éthylène et le butadiène avec ce même complexe.

Ce type de complexe non alkylé comporte ainsi dans son environnement une ou plusieurs molécules complexantes L, qui peuvent par exemple être constituées de tétrahydrofuranne ou d'éther diéthylique, et qui sont ajoutées pour des raisons de synthèse organométallique.

Or, il s'avère que ces molécules complexantes peuvent entrer en compétition avec le monomère éthylénique lors de la complexation sur le lanthanide, avec comme conséquence indésirable une limitation de l'activité catalytique et donc du rendement de la polymérisation.

Par ailleurs, l'article chinois de Cui, Li Qiang et al: « Preliminary investigations on polymerization catalysts composed of lanthanocene and methyl aluminoxane », Polymer Bulletin (Berlin), 1998, 40(6), pp. 729-734, présente un système catalytique prévu pour l'homopolymérisation de l'isoprène, du butadiène, ou du styrène. Ce système catalytique comprend:

- un complexe organométallique de terre rare répondant à l'une ou l'autre des formules suivantes:

$(C_5H_9Cp)_2NdCl$ (I),

$(C_5H_9Cp)_2SmCl$ (II),

$(MeCp)_2SmOAr'$ (III),

$(Ind)_2NdCl$ (IV),

$Me_2Si(Ind)_2NdCl$ (V),

$(Flu)_2NdCl$ (VI),

  où Cp, Ind et Flu sont respectivement des groupes cyclopentadiényle, indényle et fluorényle et OAr' est un groupe phénoxy; et
- un co-catalyseur constitué de méthylaluminoxane, testé en comparaison d'un co-catalyseur constitué d'un alkyl aluminium.

La demanderesse a découvert un système catalytique comprenant :

- d'une part, un complexe organométallique représenté par la formule générique suivante B':

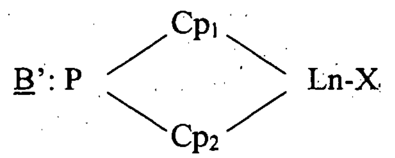

où Ln représente un métal d'un lanthanide dont le numéro atomique peut aller de 57 à 71,
où X représente un halogène pouvant être le chlore, le fluor, le brome ou l'iode,
où, dans la formule B', une molécule de ligand est reliée audit métal Ln, constituée de deux groupes cyclopentadiényle ou fluorényle $Cp_1$ et $Cp_2$ qui sont substitués ou non et qui sont reliés entre eux par un pont P répondant à la formule $MR_2$, où M est un élément de la colonne IVA de la classification périodique de Mendeleev, par exemple le silicium, et où R est un groupe alkyle comprenant de 1 à 20 atomes de carbone,

- et d'autre part, permet de remédier à l'inconvénient précité qui est inhérent aux complexes non alkylés à base de lanthanides qui comprennent des molécules complexantes, et donc de copolymériser l'éthylène avec un diène conjugué avec un rendement de polymérisation satisfaisant.

De préférence, ledit complexe organométallique est tel que le lanthanide Ln est le néodyme.
A titre préférentiel, $Cp_1$ et $Cp_2$ sont identiques, et chacun d'eux comprend un groupe cyclopentadiényle.
A titre encore plus préférentiel, $Cp_1$ et $Cp_2$ sont chacun constitués d'un groupe cyclopentadiényle qui est substitué par un radical alkyl où alkyl silyl.
Dans le cas d'une substitution par un radical alkyl silyl, $Cp_1$ et $Cp_2$ répondent chacun à la formule $Cp_B=(C_5H_3)(SiMe_3)$ pour ladite formule générique B' (Me représentant un groupe méthyle). Le complexe organométallique répond alors à la formule particulière B ci-après.

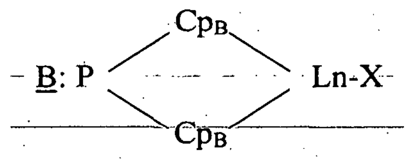

Dans la formule particulière B, est donc reliée audit métal Ln une molécule de ligand, constituée de deux groupes $Cp_B$ qui sont reliés entre eux par ledit pont P, $Cp_B$ étant constitué d'un groupe cyclopentadiényle qui est substitué par un radical alkyl silyl répondant à la formule $(C_5H_3)(SiMe_3)$.
Selon une variante de réalisation de l'invention où $Cp_1$ et $Cp_2$ sont identiques, chacun d'eux comprend un groupe fluorényle non substitué qui répond à la formule $C_{13}H_8$, pour ladite formule générique B'. Dans ce dernier cas, à la formule B' correspond la formule particulière B précitée, dans laquelle $Cp_B=C_{13}H_8$.
Dans le cas où $Cp_1 = Cp_2 = Cp$, ledit complexe organométallique est préparé

- dans une première étape, en faisant réagir avec un alkyl lithium une molécule hydrogénée de ligand, représentée par la formule HCp, pour obtenir un sel de lithium,
- dans une seconde étape, en faisant réagir dans un solvant complexant ledit sel avec un trihalogénure anhydre d'un lanthanide qui est représenté par la formule $LnX_3$, où X représente un halogène pouvant être le chlore, le fluor, le brome, ou l'iode,
- dans une troisième étape, en évaporant ledit solvant complexant, puis en procédant dans un solvant non complexant à l'extraction du produit obtenu au terme de ladite seconde étape, et éventuellement,
- dans une quatrième étape, en procédant à la cristallisation du produit extrait au terme de ladite troisième étape, pour obtenir ledit complexe organométallique répondant à la formule B qui soit totalement exempt dudit solvant complexant.

Pour ladite première étape, on utilise de préférence à titre d'alkyl lithium le butyl lithium.
Pour ladite seconde étape, on utilise de préférence à titre de solvant complexant le tétrahydrofuranne. De plus, on fait réagir avantageusement deux moles dudit sel de lithium avec une ou deux moles dudit trihalogénure de lanthanide.
Pour ladite troisième étape, on utilise de préférence à titre de solvant non complexant le toluène ou l'heptane.
Quant audit co-catalyseur, dans le cas où il est constitué d'un mélange d'un alkyl aluminium et d'un alkyl lithium, ces deux constituants sont avantageusement présents en quantités stoechiométriques ou proches de la stoechiométrie dans ledit mélange, pour l'obtention d'une activité catalytique satisfaisante.

Pour ce co-catalyseur, on utilise avantageusement le butyloctyl magnésium à titre d'alkyl magnésium, le butyl lithium à titre d'alkyl lithium, l'hydrure de diisobutyl aluminium à titre d'alkyl aluminium, et le chlorure de butyl magnésium à titre de réactif de Grignard.

Les copolymères d'éthylène et d'un diène conjugué sont préparés par un procédé qui consiste à faire réagir, dans un solvant hydrocarboné inerte et en présence de l'éthylène et du diène conjugué, ledit complexe organométallique avec ledit co-catalyseur.

On peut par exemple utiliser à titre de diène conjugué le 1, 3-butadiène, le 2-méthyl 1, 3-butadiène (respectivement appelés butadiène et isoprène dans la suite de la présente description), les 2, 3-di (alcoyle en Cl à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

La réaction mise en oeuvre dans ce procédé peut être réalisée en suspension ou en solution, sous une pression variable, et à une température comprise entre -20° C et 220° C, de préférence comprise entre 20° C et 90° C.

Le rapport du nombre de moles dudit co-catalyseur sur le nombre de moles dudit complexe organométallique est choisi égal ou.supérieur à 1 et, de préférence, il peut aller de 2 à 100.

La concentration en lanthanide du milieu réactionnel est avantageusement inférieure à 0,3 mmol/1.

Quant à la fraction molaire de butadiène dans ce milieu réactionnel, elle est avantageusement comprise entre 1 % et 80 %.

Le copolymère d'éthylène et d'un diène conjugué qui est obtenu par ce procédé peut présenter les caractéristiques de microstructure suivantes, en fonction du complexe organométallique utilisé pour le système catalytique.

- Si l'on utilise le butadiène à titre de premier exemple de diène conjugué, le copolymère obtenu pourra présenter les enchaînements de chaîne suivants pour les unités butadiène qui sont insérées dans ce copolymère:

    1, 4 cis; 1, 4 trans; 1, 2 ou sous la forme de trans 1, 2 cyclohexane.
    Plus précisément, si l'on utilise en outre à titre de complexe organométallique un complexe répondant à l'une des formules $[(C_5H_4)SiMei]_2NdCl$, $\{[(C_5H_3)SiMe_3]_2SiMe_2\}NdCl$ ou $(C_{13}H_9)_2NdCl$, alors le butadiène sera majoritairement inséré dans la chaîne du copolymère par des enchaînements 1, 4 trans.
    Et si l'on utilise un complexe répondant à la formule $[(C_{13}H_8)_2SiMe_2]NdCl$, alors le butadiène sera majoritairement inséré dans la chaîne du copolymère par des enchaînements trans 1, 2 cyclohexane.

- Si l'on utilise l'isoprène à titre de second exemple de diène conjugué, alors le copolymère obtenu pourra présenter les enchaînements de chaîne suivants pour les unités isoprène qui sont insérées dans ce copolymère:

    1,4; 1, 2 ou 3, 4.

Plus précisément, si l'on utilise en outre à titre de complexe organométallique un complexe répondant à la formule $[(C_5H_4)SiMe_3]_2NdCl$, alors l'isoprène sera majoritairement inséré dans la chaîne du copolymère par des enchaînements 1, 4.

Et si l'on utilise un complexe répondant à la formule $[(C_{13}H_8)_2SiMe_2]NdCl$, alors l'isoprène sera majoritairement inséré dans la chaîne du copolymère par des enchaînements 3, 4.

Selon une autre caractéristique des copolymères d'éthylène et de butadiène obtenus par le procédé, ces copolymères présentent une statistique d'enchaînement "éthylène-butadiène" qui est essentiellement du type alternée lorsqu'on utilise un complexe organométallique répondant à la formule $[(C_5H_4)SiMe_3]_2NdCl$ ou à la formule $\{[(C_5H_3)SiMe_3]_2SiMe_2\}NdCl$, alors que cette statistique d'enchaînement est essentiellement du type à blocs lorsqu'on utilise un complexe de formule $(C_{13}H_9)_2NdCl$.

Les caractéristiques précitées de la présente invention, ainsi que d'autres, seront mieux comprises à la lecture de la description suivante de plusieurs exemples de réalisation de l'invention, donnés à titre illustratif et non limitatif, en comparaison d'un dernier exemple illustrant un état antérieur de la technique.

Pour tous les exemples suivants, on a opéré sous argon et on a préalablement séché les solvants utilisés par distillation, ou bien sur un tamis moléculaire de 3 A sous balayage d'argon.

On a déterminé, pour chacun des copolymères obtenus dans ces exemples, la microstructure de ces copolymères, d'une part, par les techniques de $RMN^1H$ et, d'autre part, par la technique $RMN^{13}C$. On a utilisé à cet effet un spectromètre commercialisé sous la dénomination "BRUKER", à des fréquences de 400 MHz pour la technique de $RMN^1H$ et de 100,6 MHz pour la technique de $RMN^{13}C$.

On a détaillé à l'annexe I la méthode utilisée pour la détermination de cette microstructure.

**EXEMPLE 1:**

**Système catalytique comprenant un complexe organométallique neutre ponté: le chloro (μ-diméthylsilyl)bis(η5-triméthylsilylcyclopentadiényl) néodyme, répondant à la formule {[($C_5H_3$)$SiMe_3$]$_2$$SiMe_2$)NdCl (formule générique « B » précitée).**

- Synthèse d'un composé de formule f($C_5H_4$)$SiMe_3$]$_2$$SiMe_2$:

On introduit dans un tube de Schlenk 16 mmol d'un composé de formule Li[($C_5H_4$)$SiMe_3$], 8 mmol de $Me_2SiCl_2$ et 80 ml de THF. On agite l'ensemble pendant une nuit et à température ambiante. On évapore ensuite une partie du THF, et on ajoute de l'heptane. La solution obtenue est ensuite successivement hydrolysée, lavée au moyen d'une solution aqueuse saturée en $NH_4Cl$, et séchée sur du sulfate de magnésium. On évapore ensuite le THF, et le produit finalement obtenu est une huile visqueuse répondant à la formule précitée.

- Synthèse d'un sel de formule [($C_5H_3$)$SiMe_3$]$_2$$SiMe_2Li_2$:

Dans un tube de Schlenk qui contient une solution de solution de THF comprenant 7 mmol dudit composé de formule [($C_5H_4$)$SiMe_3$]$_2$$SiMe_2$, on ajoute progressivement et à 0° C 14 mmol de BuLi. On agite l'ensemble à température ambiante pendant 6 heures, puis on fait précipiter le produit obtenu par ajout d'heptane. On filtre ensuite le précipité, on le lave à l'heptane puis on le sèche sous vide. On obtient ainsi le sel précité.

- Synthèse du complexe organométallique de formule {[($C_5H_3$)$SiMe_3$]$_2$$SiMe_2$}NdCl:

On agite à reflux et pendant une nuit 4 mmol de $NdCl_3$ anhydre dans du THF. On ajoute ensuite 4 mmol dudit sel de formule [($C_5H_3$)$SiMe_3$]$_2$$SiMe_2Li_2$ à cette suspension. Puis on agite l'ensemble, dans une premier temps, pendant 4 heures à température ambiante puis, dans un second temps, pendant 24 heures à reflux dans le THF. On évapore le THF et on ajoute du toluène. On filtre le sel, puis on cristallise à une température de -10° C le produit finalement obtenu après l'avoir concentré. On obtient ainsi ledit complexe organométallique.

- L'analyse élémentaire centésimale de ce complexe donne les pourcentages suivants pour les atomes de carbone et d'hydrogène:

$$\% C = 42,8 \text{ et } \% H = 5,75.$$

On a procédé à la caractérisation de ce complexe organométallique par la technique de RMN $^1$H à 300 MHz. On observe par cette technique deux massifs dont chaque intégrale correspond à 3 protons:

un premier massif à 2,13 ppm et un second massif à - 8,97 ppm sont chacun représentatifs des protons de $Si(CH_3)_2$ de ce complexe.

On observe enfin un massif à -2,99 ppm, dont l'intégrale correspond à 18 protons et qui est représentatif des protons des deux substituants $Si(CH_3)_3$ dudit complexe.

On notera que les pics correspondant aux protons de $C_5H_3$ ne sont pas détectés, probablement du fait que ces pics sont très larges.

- Procédé de copolymérisation:

On réalise trois essais correspondant chacun à l'introduction en une seule fois, dans un réacteur contenant environ 300 ml de toluène, dudit complexe organométallique de formule {[($C_5H_3$)$SiMe_3$]$_2$$SiMe_2$}NdCl en quantité x (mg) déterminée, d'un mélange d'éthylène et de butadiène avec une fraction molaire déterminée y (%) de butadiène, et d'un co-catalyseur. La température interne du réacteur est portée à 80° C.

Lorsque la fraction y de butadiène le permet, on maintient la pression interne du réacteur à une valeur constante, qui est égale à 4 bars.

Après un temps t, on stoppe la polymérisation par refroidissement et dégazage du réacteur, puis on fait précipiter le polymère obtenu dans du méthanol. Après séchage, on obtient une masse m de polymère.

Pour chacun de ces trois essais, le co-catalyseur utilisé est constitué d'un mélange de BuLi et d'HDiBA selon

les proportions molaires suivantes:

$$BuLi / HDiBA / néodyme = 10/10/1.$$

Le tableau I ci-dessous précise les conditions opératoires et les résultats obtenus pour les trois essais précités.

Tableau I

| essais | x (mg) | y (%) dans mélange monomères | % butadiène dans le copolymère | stéréochimie de l'insertion du butadiène dans le copolymère | | | co-catalyseur | t (min) | m (g) |
|---|---|---|---|---|---|---|---|---|---|
| | | | | % 1, 2 | % 1, 4 trans | % trans 1, 2 cyclohexane | | | |
| n°1 | 31 | 5,4 | 6,9 | 2 | 98 | 0 | BuLi+HDiBA | 30 | 13,5 |
| n°2 | 30 | 43 | 41 | 2,5 | 97,5 | 0 | BuLi+HDiBA | 120 | 4,8 |
| n°3 | 36 | 80 | 61,5 | 4,5 | 95,5 | 0 | BuLi+HDiBA | 900 | 0,5 |

On a cherché à déterminer la statistique d'enchaînements "éthylène-butadiène" pour le copolymère obtenu à l'essai n°2.

En mettant en oeuvre la méthode de l'annexe II, on a obtenu pour ce copolymère:

- un indice de bloc $\eta$ égal à 1,69 et
- un indice dé bloc $\eta_{alterné}$ (correspondant à un copolymère parfaitement alterné de même composition) égal à 1,78.

On en déduit que ce copolymère présente une tendance à l'alternance pour ces enchaînements.

**EXEMPLE 2 :**

**Système catalytique comprenant un complexe organométallique neutre ponté: le chloro ($\mu$-diméthylsilyl)bis($\eta$5-fluorényl) néodyme, répondant à la formule $[(C_{13}H_8)_2SiMe_2]NdCl$ (formule générique.« B » précitée).**

- Synthèse d'un composé de formule $Me_2Si(C_{13}H_9)_2$:

On agite à reflux dans du THF et pendant une nuit 18 mmol de $C_{13}H_{10}$ et 18 mmol d'hydrure de sodium. On ajoute ensuite à ce mélange 8,1 mmol de $Cl_2SiMe_2$, puis on agite la solution obtenue pendant 3 heures et à température ambiante. On évapore ensuite une partie du THF, puis on ajoute de l'heptane. On hydrolyse la phase organique obtenue et on l'extrait à plusieurs reprises par une solution aqueuse saturée en $NH_4Cl$. Puis on évapore le solvant et, après séchage sous vide à 60° C de l'extrait, on récupère finalement ledit composé répondant à la formule précitée.

- Synthèse d'un sel de formule $Me_2Si(C_{13}H_8Li_2$:

On agite à température ambiante, pendant une nuit dans du toluène puis pendant 3 heures à 50° C, 4,4 mmol dudit composé de formule $Me_2Si(C_{13}H_9)_2$ et 13 mmol de BuLi. On obtient un précipité constitué d'un sel répondant à la formule précitée, que l'on lave à l'heptane puis que l'on sèche sous vide.

- Synthèse du complexe organométallique de formule $[(C_{13}H_8)_2SiMe_2]NdCl$:

On agite à reflux du THF et pendant une nuit 2 mmol de $NdCl_3$. On y ajoute ensuite 2,1 mol dudit sel à O° C, puis on chauffe l'ensemble à reflux pendant 22 heures. On évapore ensuite le THF, et on récupère ledit complexe organométallique par extraction au toluène suivie d'une évaporation dé ce dernier.

- Procédé de copolymérisation de l'éthylène et du butadiène:

On réalise cinq essais en procédant comme dans l'exemple 1, à la différence que l'on utilise à titre de complexe organométallique ce composé de formule $[(C_{13}H_8)_2SiMe_2]NdCl$.

Pour les deux premiers essais, le co-catalyseur utilisé est constitué d'un mélange de BuLi et d'HDiBA selon les proportions molaires suivantes:

$$BuLi / HDiBA / néodyme = 10/10/1.$$

Pour chacun des troisième et quatrième essais, le co-catalyseur utilisé est constitué de chlorure de butyl magnésium selon la proportion molaire de 20/1 par rapport au néodyme.

Pour le cinquième essai, le co-catalyseur utilisé est constitué de BuLi selon la proportion molaire de 2/1 par rapport au néodyme.

Le tableau II ci-dessous précise les conditions opératoires et les résultats obtenus pour les cinq essais précités.

Tableau II

| essais | x (mg) | y (%) dans mélange monomères | % butadiène dans le copolymère | stéréochimie de l'insertion du butadiène dans le copolymère | | | co-catalyseur | t (min) | m (g) |
|---|---|---|---|---|---|---|---|---|---|
| | | | | % 1,2 | % 1,4 trans | % trans 1, 2 cyclohexane | | | |
| n°1 | 21,3 | 5 | 4 | 18 | 23 | 58 | BuLi+HDiBA | 70 | 9,9 |
| n°2 | 25,8 | 20 | 10,2 | 23,5 | 28,5 | 48 | BuLi+HDiBA | 135 | 3 |
| n°3 | 18,9 | 5 | 3,9 | 20 | 18 | 62 | butyl MgCl | 65 | 12,1 |
| n°4 | 17,3 | 19 | 21 | 28 | 22 | 50 | butyl MgCl | 60 | 2,8 |
| n°5 | 19,2 | 4,5 | 5,4 | 23 | 23 | 54 | BuLi | 60 | 3,7 |

- Procédé de copolymérisation de l'éthylène et de l'isoprène:

On synthétise ledit complexe organométallique de formule $[(C_{13}H_8)_2SiMe_2]NdCl$ de la même manière qu'au paragraphe 1) de cet exemple 2.

On réalise un essai en suivant le même procédé que celui décrit au paragraphe 2) de l'exemple 1.

Le tableau III suivant précise les conditions opératoires et les résultats obtenus pour cet essai.

Tableau III

| x (mg) | y (ml) | % isoprène dans le copolymère | stéréochimie de l'insertion de l'isoprène dans le copolymère | | | co-catalyseur | t (min) | m (g) |
|---|---|---|---|---|---|---|---|---|
| | | | % 1, 2 | %1, 4 | % 3, 4 | | | |
| 31,1 | 1 | 2,12 | 1,6 | 21,5 | 76,9 | BuLi+HDiBA | 6 | 4,30 |

**EXEMPLE 3 :**

**Système catalytique comprenant un complexe organométallique connu, répondant à la formule $(C_5Me_5)_2NdCl_2Li(OEt_2)_2$.**

- Synthèse d'un sel de formule $Li(C_5Me_5)$:

A 29,9 mmol de $HC_5Me_5$ dans de l'heptane à 0° C, on ajoute 29,9 mmol de BuLi. On agite l'ensemble à température ambiante pendant une nuit. On lave ensuite le sel $Li(C_5Me_5)$ ainsi obtenu, puis on le sèche sous vide.

- Synthèse d'un complexe organométallique de formule $(C_5Me_5)_2NdCl_2Li(OEt_2)_2$:

On agite à reflux dans du tétrahydrofuranne (THF) et pendant une nuit 9,2 mmol de trichlorure de néodyme $NdCl_3$. On porte ensuite à 0° C la suspension ainsi obtenue, puis on y ajoute 18,4 mmol dudit sel de formule $Li(C_5Me_5)$. On agite l'ensemble à reflux pendant une nuit. On évapore ensuite le THF puis on ajoute de l'éther à la solution obtenue. On filtre ensuite la solution résultante, puis on la concentre. On obtient finalement le complexe organométallique répondant à la formule précitée par cristallisation à -30° C.

- Procédé de copolymérisation de l'éthylène et du butadiène:

On réalise deux essais en procédant comme dans l'exemple 1, à la différence que l'on utilise à titre de complexe organométallique ce composé de formule $(C_5Me_5)_2NdCl_2Li(OEt_2)_2$.

Le tableau IV ci-dessous précise les conditions opératoires et les résultats obtenus avec, à titre de co-catalyseur, le mélange précité de BuLi et d'HDiBA selon les proportions butyl lithium / HDiBA / néodyme égales à 10/10/1.

Tableau IV

| essais | x (mg) | y dans mélange monomère | % butadiène dans le copolymère | stéréochimie de l'insertion du butadiène dans le copolymère | | | co-catalyseur | t (min) | m (g) |
|---|---|---|---|---|---|---|---|---|---|
| | | | | % 1, 2 | % 1, 4 trans | % trans 1, 2 cyclohexane | | | |
| n°1 | 18,7 | 5 | 0,6 | 30 | 70 | 0 | BuLi+HDiBA | 65 | 1,6 |
| n°2 | 14,4 | 5 | 0,6 | 76 | 24 | 0 | BuLi+HDiBA | 60 | 1,4 |

**ANNEXE I**

**Méthode de détermination de la microstructure des insertions des diènes conjugués dans les copolymères d'éthylène et d'un diène conjugué**:

NOTATIONS:

Dans l'ensemble des schémas et des tableaux de cette annexe, on a utilisé les symboles suivants:

T: unité butadiène ou isoprène insérée en 1, 4 trans,
C: unité butadiène ou isoprène insérée en 1, 4 cis,
L: unité butadiène insérée en 1, 4 cis ou trans,
V: unité butadiène insérée en 1,2,
Cy: unité butadiène insérée dans un cycle,
E: unité éthylène, et
B: unité butadiène.

1) Concernant les copolymères d'éthylène et de butadiène:

a) A partir du spectre RMN $^{13}C$:

Pour déterminer les proportions des divers taux de butadiène d'un copolymère, il est nécessaire de réaliser un spectre RMN$^{13}C$.

Dans certains cas, ce spectre comporte des raies caractéristiques de la formation de cycles, qui sont répertoriées dans le tableau 4 ci-après. Il n'est alors pas possible de calculer simplement le taux de butadiène à partir du spectre RMN$^1H$. En effet, les résonances qui résultent de ces cycles en RMN$^1H$ se trouvent dans la zone des $CH_2$ de l'éthylène, et elles ne peuvent pas être évaluées séparément.

Dans ce cas précis, le calcul des taux de butadiène s'effectue à partir de la détermination des intégrales des raies du spectre RMN$^{13}C$.

Pour les copolymères d'éthylène et de butadiène, le butadiène peut s'insérer dans la chaîne de copolymère suivant quatre types d'insertion:

- 1.4 trans (voir schéma 1 ci-après),
- 1. 4 cis (voir schéma 2 ci-après),
- 1.2 (voir schéma 3 ci-après), et
- sous forme de cycles trans 1. 2 cyclohexane (voir schéma 4 ci-après).

Schéma 1 : notations employées pour désigner les différents carbones d'une unité butadiène insérée en 1,4 trans et sous forme isolée dans la chaîne de copolymère

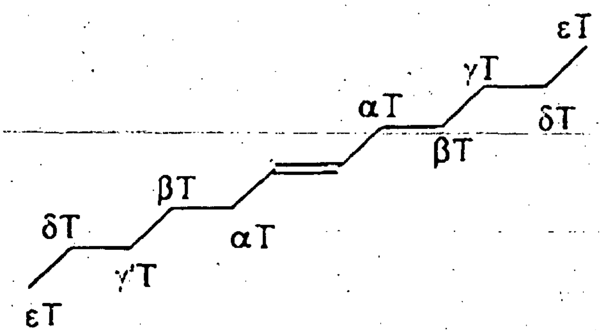

Schéma 2 : notations employées pour désigner les différents carbones d'une unité butadiène insérée en 1,4 cis et sous forme isolée dans la chaîne de copolymère

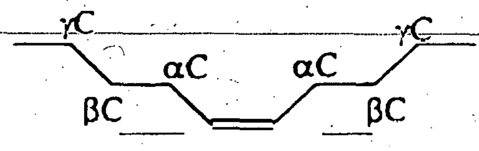

Schéma 3 : notations employées pour désigner les différents carbones d'une unité butadiène insérée en 1,2 et sous forme isolée dans la chaîne de copolymère

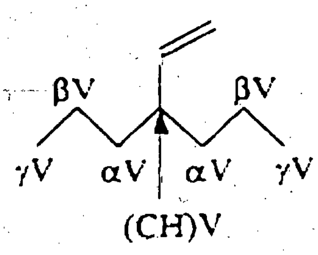

Schéma 4 : notations employées pour désigner les différents carbones d'une unité butadiène insérée sous forme de trans 1,2 cyclohexane isolés dans la chaîne de copolymère

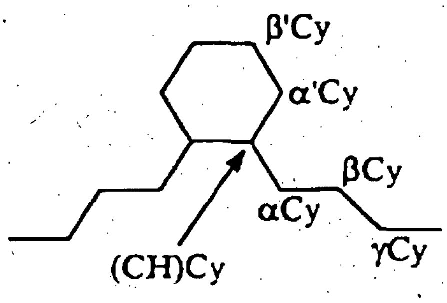

La plupart de ces atomes de carbone résonnent à une fréquence qui leur est propre, laquelle ne correspond pas à la fréquence de résonance des atomes de carbone d'une chaîne de polyéthylène. Les tableaux suivants 1 à 4 résument les valeurs des déplacements chimiques δ pour ces atomes de carbone, et pour chacun des quatre types d'insertion précités.

Tableau 1 : insertion du butadiène en 1,4 cis, déplacement chimique caractéristique

| Intégrale | Type de carbone | δ (ppm) |
|---|---|---|
| 13 | αC | 27,88 |

Tableau 2 : raies caractéristiques de l'insertion du butadiène en 1,2

| Intégrale | Type de carbone | δ (ppm) |
|---|---|---|
| | (CH) V | 44,27 |
| 9 | αV | 35,48 |
| 10 | βV | 27,51 |
| | γV | 30,22 |

Tableau 3: raies caractéristiques de l'insertion du butadiène sous forme de trans( 1,2)cyclohexane

| Intégrale | Type de carbone | δ (ppm) |
|---|---|---|
| | (CH)Cy | 42,02 |
| | αCy | 33,99 |
| | αCy | 32,26 |
| | γCy | 30,59 |
| 11 | βCy | 27,02 |
| 12 | βCy | 26,67 |

Tableau 4 : valeurs des déplacements chimiques des carbones d'unités butadiène insérées en (1,4) trans

| Intégrale | Type de carbone | δ (ppm) |
|---|---|---|
| 1 | γδ TEET | 29,42 ppm |
| 2 | γδ TEEE<br>βγ TET | 29,56 ppm |
| 3 | δε TEEET | 29,87 ppm |
| 4 | δ TEEEE | 29,91 ppm |
| 4' | ε TEEEE<br>βε TEEEE | 30,02 ppm |
| 5 | EE et β TEEE | 30,06 ppm |
| 6 | αδ TET | 32,76 ppm |
| 7 | α TEE | 32,90 ppm |
| 8 | αβ TT | 33,06 ppm |

Pour ces copolymères d'éthylène et de butadiène obtenus selon la présente invention, divers types d'enchaînements ont été mis en évidence grâce aux spectres RMN$^{13}$C. Ces enchaînements sont illustrés sur les schémas 5 à

8 ci-après. On a utilisé deux lettres de l'alphabet grec pour nommer en regard les différents carbones de ces enchaînements.

Schéma 5 : notations employées pour décrire les carbones d'un enchaînement TET

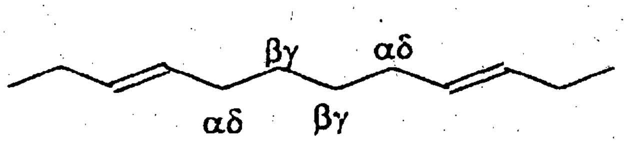

Schéma 6 : notations employées pour décrire les carbones d'un enchaînement TT

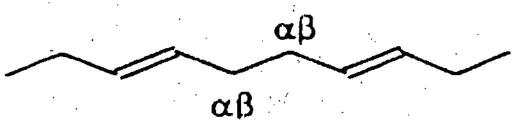

Schéma 7 : notations employées pour décrire les carbones d'un enchaînement TEET

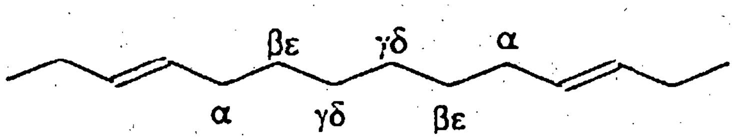

Schéma 8 : notations employées pour décrire les carbones d'un enchaînement TEEET

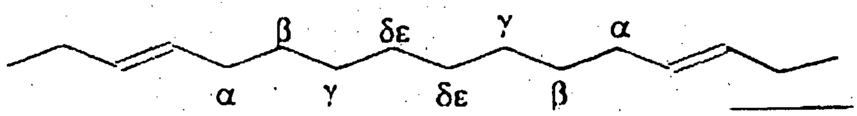

Comme pour les unités de butadiène insérées de façon isolée dans la chaîne de copolymère, certains des carbones de ces enchaînements résonnent à une fréquence qui leur est propre. Les valeurs correspondantes des déplacements chimiques sont également répertoriées dans le tableau 4 ci-dessus (les-lettres majuscules-dans la colonne relative à chaque type de carbone précisent le type d'enchaînement dont il est question).

La composition du copolymère a été déterminée à partir des valeurs des intégrales de certaines des raies qui sont listées dans les tableaux 1 à 4 ci-dessus. On peut écrire que:

$$T = (6+7+8)/2$$

$$V = (9+10)/4$$

$$Cy = (11+12)/4$$

$$C = 13/2$$

$$2E = (\text{intégrale de } 26{,}8 \text{ ppm à } 31{,}5 \text{ ppm}) + (12+9)/2.$$

Ces valeurs sont ensuite transformées en pourcentages.

b) <u>A partir du spectre RMN $^{1}H$</u>:

Lorsque sur le spectre RMN $^{13}C$ les raies caractéristiques de cycles sont absentes, le taux de butadiène inséré dans le copolymère peut être calculé plus précisément et plus simplement à partir du spectre RMN $^{1}H$.

' Cependant, ce calcul ne permet pas de déterminer si le butadiène s'est inséré en cis ou en trans. Il donne uniquement accès au pourcentage de butadiène total inséré en 1,4. Si, d'après le spectre RMN $^{13}C$, les deux types d'insertions se produisent, il faut procéder au calcul du paragraphe précédent pour déterminer dans quelles proportions ces insertions ont lieu.

Dans le cas contraire, le calcul s'effectue à partir des intégrales de certaines raies du spectre qui sont listées dans le tableau 5. Le schéma 8 précise la signification du terme terminaison vinylique.

<u>Schéma 9 : notations employées pour désigner les différents protons</u>

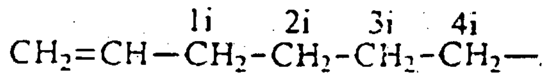

terminaison vinylique

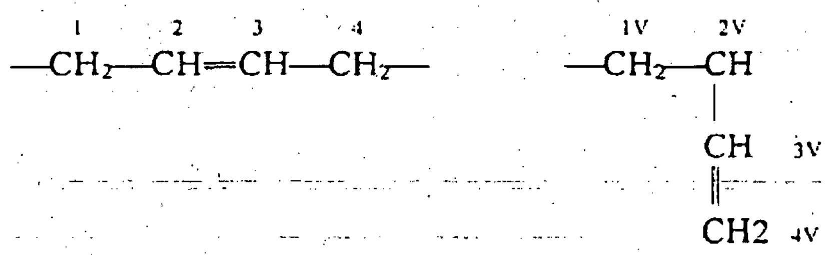

<u>Tableau 5 : raies caractéristiques en RMN 1H de copolymères éthylène/butadiène ainsi que de terminaisons de chaînes</u>

| Intégrale | δ (ppm) | Type de proton | Nombre de protons |
|---|---|---|---|
| $I_1$ | 0,87 0,89 | $CH_3$ en fin de chaine | |
| | 1,30 | IV | 2 |
| | | $CH_2$ de l'éthylène | 4 |
| | 2 | 1+4 | 4 |
| | | 2V | 1 |
| | | $CH_2$ en α d'une terminaison vinylique | 2 |
| $I_2$ | 4,9 | $CH_2$= d'une terminaison vinylique | 2 |
| | | 4V | 2 |
| $I_3$ | 5.40 | 2+3 | 2 |
| $I_4$ | ≅ 5,55 | 3V | 1 |
| $I_5$ | ≅ 5,75 | CH d'une terminaison vinylique | 1 |

On peut alors écrire que :

$$T \ ou \ C = I_3 \div 2$$

$$V = I_4$$

$$E = [I_1 - 2 \times I_3 - 3 \times I_4 + 4 \times I_5] \div 4$$

Ces valeurs sont aisément transformées en pourcentage.

2) Concernant les copolymères d'éthylène et d'isoprène:

Pour déterminer les proportions des insertions d'isoprène dans ces copolymères, on réalise à la fois des spectres RMN$^{13}$C et RMN$^{1}$H desdits copolymères.

L'isoprène peut s'insérer dans la chaîne de copolymère suivant quatre types d'insertion, illustrés sur le schéma 10 suivant.

Schéma 10 : différents types d'insertion de l'isoprène

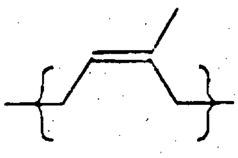

1,4 cis

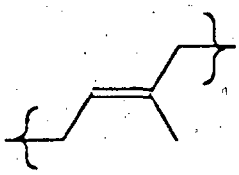

1,4 trans

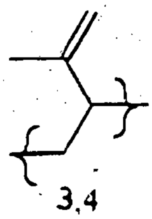

3,4

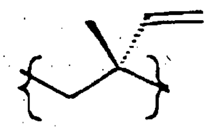

1,2

L'observation du spectre RMN$^{13}$C montre que, dans ce cas, à l'inverse des copolymères d'éthylène et du butadiène, il ne se forme pas de cycles.

Les taux d'insertion en 1,2, 3,4 et 1,4 sont déterminés à partir du spectre RMN $^{1}$H. Des raies caractéristiques de ces insertions sont présentes sur le spectre $^{1}$H. Elles sont résumées dans le tableau 6. Les notations qui sont employées sont décrites sur le schéma 11.

Schéma 11 : notations employées pour désigner les différents protons

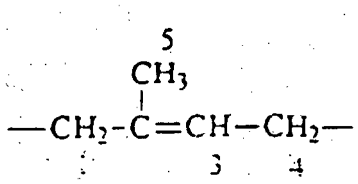

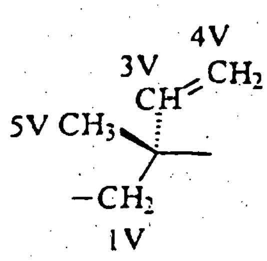

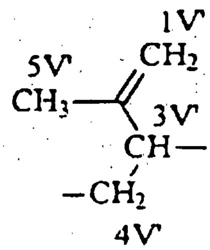

Tableau 6 : raies caractéristiques en RMN$^{1}$H de copolymères d'éthylène et d'isoprène

| Intégrale | δ en ppm | Type de proton | Nombre de protons |
|---|---|---|---|
| S5 | 5,6 à 5,8 | 3V | 1 |
| S3 | 5,05 à 5,25 | 3 | 1 |
| S2 | 4,82 à 5,05 | 4V | 2 |
| $S_1$ | 4,42 à 4,82 | 1V' | 2 |
| | 1,99 | 1+4<br>3V' | 4<br>1 |

(suite)

| Intégrale | δ en ppm | Type de proton | Nombre de protons |
|---|---|---|---|
| | 1,99 | 5V' et<br>5 1.4 trans | 3<br>1 |

$$1,4 = S_3$$

$$3,4 = S_1/2$$

$$1,2 = S_2/2$$

$$E = [\text{intégrale de } 0,5 \text{ ppm à } 2,5 \text{ ppm}] - [7*S_3 + 3*S_1 + 5*S_5]$$

Ces valeurs sont aisément transformées en pourcentages.

Le spectre RMN$^{13}$C permet de préciser si l'insertion de l'isoprène est en 1,4 cis ou en 1,4 trans car des raies caractéristiques de ces insertions sont présentes sur ce spectre (tableau 7).

Notation : insertion en 1,4 cis (C) ou 1,4 (T)

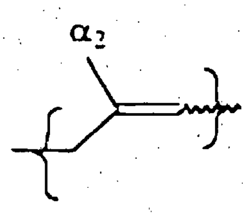

Tableau 7 : raies caractéristiques de l'insertion de l'isoprène en 1,4

| Intégrale | Type de carbone | δ (ppm) |
|---|---|---|
| 1 | $\alpha_2$ (cis) | 23,48 |
| 2 | $\alpha_2$ (trans) | 16,05 |

$$\% \ 1,4 \text{ en cis} = 1/(1+2)$$

$$\% \ 1,4 \text{ en trans} = 2/(1+2)$$

**ANNEXE II**

**Méthode de détermination de la statistique des enchaînements "éthylène-butadiène" dans les copolymères d'éthylène et de butadiène obtenus:**

NOTATIONS

tt désigne ta fraction de diades TT d'un copolymère,
ee désigne la fraction de diades EE d'un copolymère,
be désigne la fraction de diades BE ou EB d'un copolymère,
e désigne la fraction d'éthylène d'un copolymère, et
b désigne la fraction de butadiène d'un copolymère.

D'après ces définitions, on peut écrire que

$$ee = EE / (EE + BE + TT)$$

$$be = BE / (EE + TE + TT)$$

$$e = E / (E + B)$$

$$b = B / (E + B),$$

avec

TT: nombre de diades TT d'un copolymère calculé à partir du spectre RMN$^{13}$C,
EE: nombre de diades EE d'un copolymère calculé à partir du spectre RMN$^{13}$C,
BE: nombre de diades BE ou EB d'un copolymère calculé à partir du spectre RMN$^{13}$C,
E: nombre d'unités éthylène d'un copolymère calculé à partir du spectre RMN$^{13}$C, et
T: nombre d'unités butadiène 1, 4 trans d'un copolymère calculé à partir du spectre RMN$^{13}$C.

Détermination de l'indice de bloc η pour estimer la structure statistique des copolymères:

Pour certains copolymères, une raie caractéristique de la présence de diades TT apparaît sur le spectre RMN$^{13}$C. Sa valeur est donnée dans le tableau 4 de l'annexe I.

Pour les copolymères où η n'a pas été calculé, les unités butadiène sont isolées dans la chaîne.

L'indice de bloc est défini par la relation:

$$\boxed{\eta = (be) / (be)_{statistique}}$$

où

(be) représente la fraction de diades BE ou EB du copolymère analysé, et
$(be)_{statistique}$ représente la fraction de diades BE ou EB d'un copolymère statistique de même composition.

Pour un copolymère statistique homogène, on a $(be)_{statistique} = 2.\ e.\ b$ ,
et l'indice de bloc η peut alors s'écrire:

$$\eta = (be) / (2.\ e.\ b)$$

Pour un copolymère donné, l'indice de bloc $\eta$ n'apportera des informations sur la structure de ce copolymère que s'il est comparé à un indice de bloc $\eta_{alterné}$ du copolymère parfaitement alterné de même composition. Par définition, lorsque b < e (ce qui est le cas pour tous les copolymères de l'invention), on a:

$$\eta_{alterné} = 1/e$$

Pour déteminer $\eta$ et $\eta_{alterné}$ , il est donc nécessaire de connaître b, e, ee, tt et be, soit encore B, E, EE, BB et BE. Les valeurs de ces derniers paramètres peuvent être calculées à partir de certaines des intégrales des raies du spectre RMN$^{13}$C (voir annexe I), lesquelles intégrales apparaissent dans les équations suivantes:
On a:

$$BE = (1 + 2 + 6 + 7) / 2 + 13 + 9 + 11$$

$$2\ BB = 8$$

$$2\ B = 6 + 7 + 8 + (9 + 10) / 2 + (11 + 12) / 2 + 13$$

$$2\ E = [\text{intégrale de } 26{,}8 \text{ ppm à } 31{,}5 \text{ ppm}] + (12 + 9) / 2 - 13$$

$$EE = E - (BE) / 2\ .$$

<u>Conclusion sur la statistique des enchaînements éthylène/ butadiène</u>:
Plus $\eta$ sera faible et plus le copolymère aura une tendance bloc.
Plus $\eta$ sera proche de $\eta_{alterné}$ et plus le copolymère aura une tendance à l'alternance.

**Revendications**

**1.** Système catalytique de polymérisation comprenant:

- d'une part, un complexe organométallique représenté par la formule générique suivante B :

<u>B</u>:

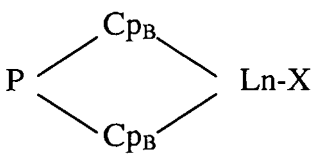

où Ln représente un métal d'un lanthanide dont le numéro atomique peut aller de 57 à 71,
où X représente un halogène pouvant être le chlore, le fluor, le brome ou l'iode, où, dans la formule <u>B</u>, est reliée audit métal Ln une molécule de ligand, constituée de deux groupes $Cp_B$ cyclopentadiényle ou fluorényle qui sont substitués ou non et qui sont reliés entre eux par un pont P répondant à la formule $MR_2$, où M est un élément de la colonne IVA de la classification périodique de Mendeleev, et où R est un groupe alkyle comprenant de 1 à 20 atomes de carbone,

et

- d'autre part, un co-catalyseur qui est choisi parmi un groupe comprenant un alkyl magnésium, un alkyl lithium, un alkyl aluminium, ou un réactif de Grignard, ou qui est constitué d'un mélange de ces constituants,

**caractérisé en ce que** dans ladite formule générique B, $Cp_B$ est constitué d'un groupe cyclopentadiényle qui est substitué par un radical alkyl silyl répondant à la formule $(C_5H_3)(SiMe_3)$, ou d'un groupe fluorényle non substitué répondant à la formule $C_{13}H_8$ et Me représente un groupe méthyle.

2. Système catalytique selon la revendication 1, **caractérisé en ce que** ledit métal M compris dans ledit pont P de formule $MR_2$ est le silicium.

3. Système catalytique selon une des revendications précédentes, **caractérisé en ce que** ledit complexe organométallique est tel que le lanthanide Ln est le néodyme.

4. Système catalytique selon une des revendications précédentes, **caractérisé en ce que** ledit alkyl magnésium, ledit alkyl lithium, ledit alkyl aluminium et ledit réactif de Grignard dudit groupe parmi lequel est choisi ledit co-catalyseur, sont respectivement constitués de butyloctyl magnésium, de butyl lithium, d'hydrure de diisobutyl aluminium, et de chlorure de butyl magnésium.

5. Système catalytique selon une des revendications précédentes, **caractérisé en ce que** ledit co-catalyseur est constitué d'un mélange d'un alkyl aluminium et d'un alkyl lithium qui sont présents en quantités sensiblement stoechiométriques dans ledit mélange.

**Patentansprüche**

1. Katalytisches Polymerisationssystem, umfassend:

- einerseits einen metallorganischen Komplex der folgenden allgemeinen Formel B:

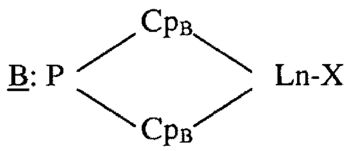

wobei Ln für ein Lanthanidmetall mit einer Ordnungszahl von 57 bis 71 steht,
wobei X für ein Halogen, bei dem es sich um Chlor, Fluor, Brom oder Iod handeln kann, steht,
wobei in der Formel B an das Metall Ln ein Ligandenmolekül gebunden ist, das aus zwei Cyclopentadienyl- oder Fluorenylgruppen $Cp_B$ besteht, die gegebenenfalls substituiert sind und über eine Brücke P der Formel $MR_2$, wobei M für ein Element der Spalte IVA des Periodensystems von Mendelejew steht und R für eine Alkylgruppe mit 1 bis 20 Kohlenstoffatomen steht, miteinander verbunden sind,

und
- andererseits einen Cokatalysator, der aus einer ein Alkylmagnesium, ein Alkyllithium, ein Alkylaluminium oder ein Grignard-Reagenz umfassenden Gruppe ausgewählt ist oder aus einer Mischung dieser Bestandteile besteht,
**dadurch gekennzeichnet, dass** in der allgemeinen Formel B $Cp_B$ für eine durch einen Alkylsilylrest substituierte Cyclopentadienylgruppe der Formel $(C_5H_3)$ $(SiMe_3)$ oder eine unsubstituierte Fluorenylgruppe der Formel $C_{13}H_8$ besteht und Me für eine Methylgruppe steht.

2. Katalytisches System nach Anspruch 1, **dadurch gekennzeichnet, dass** es sich bei dem Metall M in der Brücke P der Formel $MR_2$ um Silicium handelt.

3. Katalytisches System nach einem der vorhergehenden Ansprüche, **dadurch gekennzeichnet, dass** der metallorganische Komplex so beschaffen ist, dass es sich bei dem Lanthanid Ln um Neodym handelt.

4. Katalytisches System nach einem der vorhergehenden Ansprüche, **dadurch gekennzeichnet, dass** das Alkylmagnesium, das Alkyllithium, das Alkylaluminium und das Grignard-Reagenz, wobei der Cokatalysator aus dieser Gruppe ausgewählt ist, aus Butyloctyl-magnesium, Butyllithium, Diisobutylaluminiumhydrid bzw. Butylmagnesiumchlorid bestehen.

5. Katalytisches System nach einem der vorhergehenden Ansprüche, **dadurch gekennzeichnet, dass** der Cokatalysator aus einer Mischung eines Alkyl-aluminiums und eines Alkyllithiums, die in der Mischung in weitgehend stöchiometrischen Mengen vorliegen, besteht.

## Claims

1. Catalytic polymerization system, comprising:

- on the one hand, an organometallic complex represented by the following general formula B:

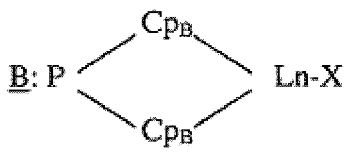

in which Ln represents a lanthanide metal, the atomic number of which may range from 57 to 71,
in which X represents a halogen which may be chlorine, fluorine, bromine or iodine,
in which, in formula B, a ligand molecule is attached to said metal Ln, which ligand molecule is composed of two substituted or unsubstituted cyclopentadienyl or fluorenyl groups $Cp_B$ which are attached to one another by a bridge P corresponding to the formula $MR_2$, in which M is an element from Group IVA of the Periodic Table of the Elements, and in which R is an alkyl group comprising from 1 to 20 carbon atoms, and

- on the other hand, a cocatalyst selected from the group comprising an alkylmagnesium, an alkyllithium, an alkylaluminium or a Grignard reagent or which is composed of a mixture of these constituents,

**characterized in that**, in said general formula B, $Cp_B$ is composed of a cyclopentadienyl group substituted by an alkylsilyl radical corresponding to the formula $(C_5H_3)$ $(SiMe_3)$ or is composed of an unsubstituted fluorenyl group corresponding to the formula $C_{13}H_8$ and Me represents a methyl group.

2. Catalytic system according to Claim 1, **characterized in that** said metal M included in said bridge P of formula $MR_2$ is silicon.

3. Catalytic system according to one of the preceding claims, **characterized in that** said organometallic complex is such that the lanthanide Ln is neodymium.

4. Catalytic system according to one of the preceding claims, **characterized in that** said alkylmagnesium, said alkyllithium, said alkylaluminium and said Grignard reagent, of said group from which said cocatalyst is chosen, are respectively composed of butyloctylmagnesium, butyllithium, diisobutylaluminium hydride and butylmagnesium chloride.

5. Catalytic system according to one of the preceding claims, **characterized in that** said cocatalyst is composed of a mixture of an alkylaluminium and an alkyllithium which are present in substantially stoichiometric amounts in said mixture.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4716257 A
- US 5109085 A


### Littérature non-brevet citée dans la description


- **BALLARD et al.** *J. Chem. Soc., Chem. Comm.,* 1978, 994-995
- **CUI, LI QIANG et al.** Preliminary investigations on polymerization catalysts composed of lanthanocene and methyl aluminoxane. *Polymer Bulletin,* 1998, vol. 40 (6), 729-734